# EUROPÄISCHE PATENTSCHRIFT

(11) **EP 3 546 466 B1**
(45) Veröffentlichungstag und Bekanntmachung des Hinweises auf die Patenterteilung: **02.12.2020**
(21) Anmeldenummer: 18164575.5
(22) Anmeldetag: 28.03.2018
(51) Int. Cl.: C07F 7/18

(54) **VERFAHREN ZUR HERSTELLUNG ALKOXYSILANGRUPPEN-HALTIGER ISOCYANATE**
METHOD FOR PRODUCING ALKOXYSILANE GROUP-CONTAINING ISOCYANATES
PROCÉDÉ DE PRODUCTION D'ISOCYANATES CONTENANT DES GROUPES ALCOXYSILANE

(43) Veröffentlichungstag der Anmeldung: 02.10.2019
(73) Patentinhaber: Evonik Operations GmbH, 45128 Essen (DE)
(72) Erfinder: KRECZINSKI, Manfred, 44652 Herne (DE); KOHLSTRUK, Stephan, 45966 Gladbeck (DE); SPYROU, Emmanouil, 46514 Schermbeck (DE); HOPPE, Dirk, 48301 Nottuln (DE)
(74) Vertreter: Evonik Patent Association

(56) Entgegenhaltungen:
- US-B2- 9 663 539
- O A SAPUTRA ET AL: "Synthesis and characterization of free-isocyanate polyurethane as renewable coating materials", I O P CONFERENCE SERIES: MATERIALS SCIENCE AND ENGINEERING, Bd. 107, 5. Februar 2016 (2016-02-05), Seite 012048, XP055479054, GB ISSN: 1757-8981, DOI: 10.1088/1757-899X/107/1/012048
- CARLONI SILVIA ET AL: "Catalytic Activity of MCM-41-TBD in the Selective Preparation of Carbamates and Unsymmetrical Alkyl Carbonates from Diethyl Carbonate", JOURNAL OF CATALYSIS, ACADEMIC PRESS, DULUTH, MN, US, Bd. 205, Nr. 1, 1. Januar 2002 (2002-01-01), Seiten 199-204, XP002467666, ISSN: 0021-9517, DOI: 10.1006/JCAT.2001.3439

## Beschreibung

Die Erfindung betrifft ein Verfahren zur Herstellung Alkoxysilangruppen-haltiger Isocyanate.

Alkoxysilangruppen-haltige Isocyanate sind als heterofunktionelle Bausteine vielseitig einsetzbar und können beispielsweise Anwendung in Beschichtungen, Dichtstoffen, Klebstoffen und Elastomer-Materialien finden, ohne allerdings auf diese Einsatzfelder beschränkt zu sein.

Verfahren zur Herstellung von Alkoxysilangruppen-haltigen Isocyanaten sind bekannt. So können sie beispielsweise durch Umsetzung von Alkoxysilanoalkylaminen mit Phosgen in Gegenwart tertiärer Amine erhalten werden (DE 35 44 601 C2, US 9,309,271 B2), wobei allerdings neben der Toxizität von Phosgen die Bildung von chlorhaltigen Nebenprodukten und Salzen von Nachteil ist.

Alternativ kann der Zugang zu Alkoxysilangruppen-haltigen Isocyanaten auch erschlossen werden durch Hydrosilylierung von Olefingruppen-haltigen Isocyanaten in Gegenwart von Edelmetallkatalysatoren (EP 0 709 392 B1). Nachteile sind hier in der Regel mangelnde Selektivität und hoher Katalysatorbedarf.

Ein weiterer Weg zu Alkoxysilan-haltigen Isocyanaten führt über die Umsetzung von Haloalkylalkoxysilanen mit Metallcyanaten unter Ausbildung von Alkoxysilanoalkylurethanen und anschließender thermischer Spaltung der Urethane unter Freisetzung der korrespondierenden Isocyanate (US 3,821,218 A, US 3,598,852 A, DE 35 24 2015 A1). Nachteilig sind hier die Bildung großer Salzmengen und der notwendige Einsatz eines Lösemittels, wobei üblicherweise Dimethylformamid eingesetzt werden muss.

US 5,218,133 A beschreibt einen Weg zur Herstellung von Alkoxysilanoalkylurethanen, der die störende Bildung stöchiometrischer Salzmengen vermeidet. Dazu werden Alkoxysilanoalkylamine in Gegenwart basischer Alkalimetallalkoxid-Katalysatoren mit Alkylcarbonaten umgesetzt und die Reaktionsmischung im Anschluss neutralisiert.

Alternativ kann die Deaktivierung des basischen Katalysators im Reaktionsgemisch auch mit halogenhaltigen Neutralisationsmitteln durchgeführt werden (WO 2007/037817 A2). Diese haben jedoch in der nachfolgend beschriebenen Spaltreaktion den Nachteil, zu stark korrosiven halogenhaltigen Stoffen und Neutralisationsprodukten zu führen, die sehr hohe Anforderungen an die Reaktormaterialien stellen und somit Investitions- und Instandhaltungskosten erhöhen.

US 5,393,910 A beschreibt ein Verfahren zur thermischen Spaltung von bevorzugt gemäß US 5,218,133 A hergestellten Alkoxysilanoalkylurethanen bei hoher Temperatur in der Gasphase. Nachteil dieses Verfahrens ist die Notwendigkeit hochtemperaturbeständigen und somit kostenintensiven Spezialequipments. Zudem wird in Patenten, die sich nicht speziell auf Silanoisocyanate beziehen, berichtet, dass die erforderliche hohe Temperatur zur Reaktorverkokung führt. Dies ist von Nachteil, weil die Anlagenverfügbarkeit leidet.

Alternativ zur Urethanspaltung in der Gasphase kann die thermisch induzierte Freisetzung von Alkoxysilangruppen-haltigen Isocyanaten auch verdünnt in inerten Lösemitteln durchgeführt werden (s. US 5,886,205 A, US 6,008,396 A). Dabei wird das Alkoxysilanoalkylurethan zum inerten Lösemittel addiert und die Temperatur des Lösemittels so hoch gewählt, dass einerseits die Urethanspaltung gefördert, andererseits aber unerwünschte Nebenreaktionen möglichst vermieden werden. US 5,886,205 A offenbart für die batchweise oder kontinuierlich durchführbare Reaktion pH-Werte von weniger als 8, Temperaturen von nicht mehr als 350 °C und einen Katalysator umfassend mindestens ein Metall ausgewählt aus Sn, Sb, Fe, Co, Ni, Cu, Cr, Ti und Pb oder mindestens eine Metallverbindung umfassend diese Metalle. Nachteilig ist der im Vergleich zur Gasphasenspaltung erforderliche Aufwand zur Lösemittelaufreinigung und der unvermeidbare Lösemittelverlust.

US 9,663,539 B2 beschreibt ein Verfahren zur Herstellung und anschließenden thermischen Spaltung von Alkoxysilanoalkylurethanen mit dem Ziel, farbhelle Alkoxysilangruppen-haltige Isocyanate mit hoher Lagerstabilität zu erhalten. Offenbart wird ein Verfahren zur Herstellung von Isocyanatoorganosilanen, bei dem
a) ein Aminoorganosilan mit einem organischen Carbonatester in Gegenwart eines basischen Katalysators, bei dem es sich insbesondere um einen Metallalkoxid-Katalysator oder einen Zinn-haltigen Katalysator handeln kann, zu einem Silylorganocarbamat umgesetzt wird,
b) der pH-Wert des Gemisches mit einer organischen Carbonsäure auf einen pH-Wert größer oder gleich 6,0 eingestellt wird,
c) das erhaltene Gemisch bei einer Temperatur von 80 - 130 °C gestrippt wird, um entstandenen Alkohol abzutrennen und um einen Carbonatester-Gehalt von weniger als ungefähr 5,0 Gew.-% einzustellen,
d) Filtration des Gemisches aus c),
e) Optionale Zugabe einer organischen Carbonsäure, um den pH-Wert auf größer oder gleich 6,0 einzustellen,
f) Thermisches Spalten des in d) oder e) erhaltenen Gemisches, um ein Isocyanatoorganosilan und entsprechende Nebenprodukte zu erhalten,
g) Separation der Isocyanatoorganosilane von den in f) erhaltenen Nebenprodukten und
h) Sammlung der in g) erhaltenen Isocyanatoorganosilanen.

SAPUTRA ET AL: "Synthesis and characterization of free-isocyanate polyurethane as renewable coating materials",I O P CONFERENCE SERIES: MATERIALS SCIENCE AND ENGINEERING, Bd. 107, 2016, Seite 012048, DOI: 10.1088/1757-899X/107/1/012048 und CARLONI SILVIA ET AL: "Catalytic Activity of MCM-41-TBD in the Selective Preparation of Carbamates and Unsymmetrical Alkyl Carbonates from Diethyl Carbonate",JOURNAL OF CATALYSIS, ACADEMIC PRESS, DULUTH, MN, US, Bd. 205, Nr. 1, 2002, Seiten 199-204, DOI: 10.1006/JCAT.2001.3439 lehren die Verwendung von TBD als alternativen Katalysator zur Metallalkoholaten, da es einen selektiver Organokatalysator darstellt, welcher leicht ein elektrophiles Carbokation generiert und nicht zur unerwünschten Alkylierung führt.

Die bisher im Stand der Technik eingesetzten Katalysatoren haben den Nachteil, dass sie bei üblichen Reaktionsbedingungen nicht nur die Urethanisierung der Aminoorganosilane, sondern auch ihre Alkylierung katalysieren. Die bei der Nebenreaktion entstehenden N-Alkyl-Aminosilane fördern im weiteren Prozessverlauf jedoch unerwünschte Nebenreaktionen, die die Selektivität des Verfahrens beeinträchtigen und weiterhin den Aufwand für die Aufarbeitung erhöhen.

Es ist somit vorliegend die Aufgabe der vorliegenden Erfindung, die unerwünschte Alkylierung der Aminoorganosilane und die sich daraus ableitenden Nachteile zu vermeiden.

Überraschend wurde festgestellt, dass die vorliegende Aufgabe gelöst werden kann durch das erfindungsgemäße Verfahren zur Herstellung Alkoxysilangruppen-haltigen Isocyanats, bei dem in der Abfolge der Schritte A) bis D)
A) Alkoxysilanoalkylamin mit Dialkylcarbonat in Gegenwart eines basischen Katalysators zu Alkoxysilanoalkylurethan umgesetzt,
B) gleichzeitig oder aufeinander folgend
   - der Katalysator abgetrennt und/oder deaktiviert, sowie
   - Leichtsieder, Feststoffe, Salzfrachten und/oder Hochsieder entfernt
C) nach B) erhaltenes Alkoxysilanoalkylurethan unter Freisetzung von Alkoxysilangruppen-haltigem Isocyanat und Nebenprodukt und unter Verbleib von Sumpfmaterial thermisch gespalten, während
   i) das Sumpfmaterial ganz oder partiell aus der Spaltapparatur ausgeschleust,
   ii) thermisch behandelt und/oder aufgereinigt und/oder in Gegenwart von Alkohol einer Nachbehandlung/Reurethanisierung unterzogen und
   iii) das entnommene Material nach thermischer Behandlung und/oder Aufreinigung und/oder Nachbehandlung/Reurethanisierung in Schritt A), B) oder C) erneut zugeführt wird und
D) Alkoxysilangruppen-haltiges Isocyanat und Nebenprodukt voneinander und vom Sumpfmaterial getrennt und aufgefangen wird,
wobei die Schritte C) und D) kontinuierlich geführt werden und der basische Katalysator eine Guanidin-Base ist.

Unter einem Verfahren zur Herstellung Alkoxysilangruppen-haltigen Isocyanats aus Alkoxysilanolalkylamin und Dialkylcarbonat ist vorliegend hier und im Folgenden ein Verfahren zu verstehen, bei dem aus einem oder mehreren Alkoxysilanolalkylaminen und einem oder mehreren Dialkylcarbonaten zunächst ein oder mehrere Alkoxysilanoalkylurethane hergestellt werden, die nachfolgend thermisch zu einem oder mehreren Alkoxysilangruppen-haltigen Isocyanaten und einem oder mehreren Nebenprodukten, insbesondere Alkoholen korrespondierend zu dem oder den Alkylresten des Dialkylcarbonats, umgesetzt werden. Bevorzugt ist das erfindungsgemäße Verfahren ein Verfahren, bei dem aus einem Alkoxysilanolalkylamin und einem Dialkylcarbonat zunächst ein Alkoxysilanoalkylurethan hergestellt wird, das nachfolgend thermisch zu einem Alkoxysilangruppen-haltigen Isocyanat und einem Nebenprodukt, insbesondere dem Alkohol korrespondierend zu dem Alkylrest des Dialkylcarbonats, umgesetzt wird.

Die einzelnen Schritte A) bis D) können jeweils batchweise oder kontinuierlich durchgeführt werden. Insbesondere für die Schritte C) und D) war jedoch bislang keine jedoch keine kontinuierliche Verfahrensführung offenbart. Zur Verbesserung der bislang mangelnden Selektivität und der Erhöhung der ineffizienten Rohstoffausnutzung werden nun somit mindestens die Schritte C) und D) dadurch kontinuierlich geführt, dass Schritt C) wie folgt geführt wird:
C) nach B) erhaltenes Alkoxysilanoalkylurethan wird unter Freisetzung von Alkoxysilangruppen-haltigem Isocyanat und Nebenprodukt und unter Verbleib von Sumpfmaterial thermisch gespalten, während
i) das Sumpfmaterial ganz oder partiell aus der Spaltapparatur ausgeschleust,
ii) thermisch behandelt und/oder aufgereinigt und/oder in Gegenwart von Alkohol einer Nachbehandlung/Reurethanisierung unterzogen und
iii) das entnommene Material nach thermischer Behandlung und/oder Aufreinigung und/oder Nachbehandlung/Reurethanisierung in Schritt A), B) oder C) erneut zugeführt wird.

Bislang konnten nur die Schritte A) und B) kontinuierlich geführt werden, insbesondere jedoch nicht der Spaltschritt C). Somit kann das Verfahren so durchgeführt werden, dass die Schritt A) und B) diskontinuierlich und die Schritte C) und D) kontinuierlich geführt werden. Möglich ist auch, alle Schritte A) bis D) kontinuierlich zu führen. Denkbar ist auch, nur einen der Schritte A) oder B) diskontinuierlich zu führen und die Schritte C) und D) dann kontinuierlich zu führen

Die kontinuierliche Verfahrensführung der Schritte C) bis D) wird dabei dadurch ermöglicht, dass in Schritt C) das Sumpfmaterial ganz oder partiell aus der Spaltapparatur ausgeschleust, nachfolgend thermisch behandelt und/oder aufgereinigt und/oder in Gegenwart von Alkohol einer Nachbehandlung (Reurethanisierung) unterzogen und wieder in Schritt A), B) oder C) zugeführt wird. Dadurch, dass das Sumpfmaterial abgeführt, thermisch behandelt und/oder aufgereinigt und/oder im Sumpfmaterial vorhandene Isocyanate erneut mit Alkohol thermisch urethanisiert werden, wird der Hochsiederanteil im Sumpfmaterial erniedrigt und/oder der Wertstoffanteil erhöht. Der abgeführte, thermisch behandelte und/oder aufgereinigte und/oder reurethanisierte Strom wird in Schritt A), B) oder C) des Prozesses recycliert. Bevorzugt wird auch Ausschleusung, thermische Behandlung und/oder Aufreinigung und/oder Nachbehandlung mit Alkohol und Zuführung des Sumpfmaterials kontinuierlich geführt. Besonders bevorzugt wird das Sumpfmaterial abgeführt, aufgereinigt und im Sumpfmaterial vorhandene Isocyanate erneut mit Alkohol behandelt und das aufgereinigte Sumpfmaterial wieder in Schritt A), B) oder C) zugeführt. Ganz besonders bevorzugt wird das Sumpfmaterial abgeführt, thermisch behandelt, aufgereinigt und das aufgereinigte Sumpfmaterial wieder in Schritt A), B) oder C) zugeführt.

Es wurde überraschend gefunden, dass es bei der kontinuierlichen Herstellung von Alkoxysilangruppen-haltigen Isocyanaten aus den korrespondierenden Alkoxysilanoalkylaminen von Vorteil ist, die Alkoxysilanoalkylurethane nach ihrer Synthese durch Umsetzung von Alkoxysilanoalkylaminen mit Dialkylcarbonaten von Leichtsiedern sowie möglichen Feststoffen, Salzfrachten und Hochsiedern zu befreien, die so gereinigten Alkoxysilanoalkylurethane unter Freisetzung des gewünschten Alkoxysilangruppen-haltigen Isocyanats thermisch zu spalten, einen Teil des Spaltsumpfmaterials aus der Spaltapparatur bevorzugt kontinuierlich auszuschleusen und einer thermischen Nachbehandlung zu unterziehen, so dass der Hochsiederanteil erniedrigt sowie der Wertstoffanteil der Stoffmischung erhöht wird, hieraus die Hochsiederkomponenten abzutrennen sowie die Wertstoffkomponenten in den Prozess zu recyclieren. Es hat sich herausgestellt, dass auf diese Weise zum einen eine vergleichsweise niedrige stationäre Konzentration an Hochsiederkomponenten über die gesamte Sequenz Urethan-Synthese, Urethanreinigung und Urethanspaltung realisiert wird, so dass Ablagerungen, die insbesondere durch die von Natur aus höherviskosen Hochsiederkomponenten begünstigt werden, vermieden werden können und auch langfristig eine gute Anlagenverfügbarkeit und eine gute Verfahrensausbeute gewährleistet sind. Zum anderen hat die der thermischen Spaltreaktion nachgeschaltete thermische Nachbehandlung - z. B. durch Reaktivdestillation - den Vorteil, dass im Vergleich zur Vorgehensweise ohne Nachbehandlung überraschend eine zusätzlich gesteigerte Ausbeute erzielt werden kann und auf diese Weise eine effizientere Rohstoffnutzung gefördert wird.

Bevorzugt hat das in Schritt A) eingesetzte Alkoxysilanoalkylamin die Formel (1)

R³ₘ (OR²)₃₋ₘSi-R¹-NH₂ (1)

wobei R³, R² und R¹ unabhängig voneinander gleiche oder verschiedene Kohlenwasserstoffreste mit 1-6 C-Atomen bedeuten, wobei diese linear oder verzweigt sein können, und m gleich 0 - 2 bedeutet. Bevorzugt ist m gleich 0 und R¹ gleich Methyl oder Propyl, und R² gleich Methyl oder Ethyl.

Bevorzugt ist das eingesetzte Dialkylcarbonat ausgewählt aus Dimethyl-, Diethyl-, Dipropyl- und/oder Dibutylcarbonat. Weiter bevorzugt wird nur ein Dialkylcarbonat ausgewählt aus Dimethyl-, Diethyl-, Dipropyl- und Dibutylcarbonat eingesetzt.

Der basische Katalysator ist eine Guanidin-Base. Unter Guanidin-Basen sind hier und im Folgenden bevorzugt Verbindungen zu verstehen, die in neutraler Form die folgende Strukturformel (I) aufweisen, 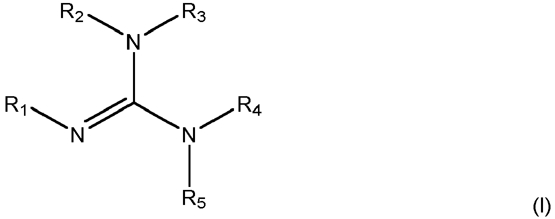 in der Ri, R₂, R₃, R₄ und R₅
- jeweils unabhängig voneinander ausgewählt aus einem ggf. substituierten C₁-C₁₄-Alkylrest ist und/oder
- R₁ und R₂ und/oder R₃ und R₄ zusammen einen ggf. substituierten C₂-, C₃-, oder C₄-Alkylenrest oder einen ggf. entsprechenden, bevorzugt mit N oder O substituierten, Heteroalkylenrest darstellen und/oder
- Rs = H ist.

Für den Fall, dass sowohl R₁ und R₂ als auch R₃ und R₄ einen ggf. substituierten C₃-Alkylenrest darstellen, weisen bevorzugte Guanidinbasen die folgende Formel (II) auf, 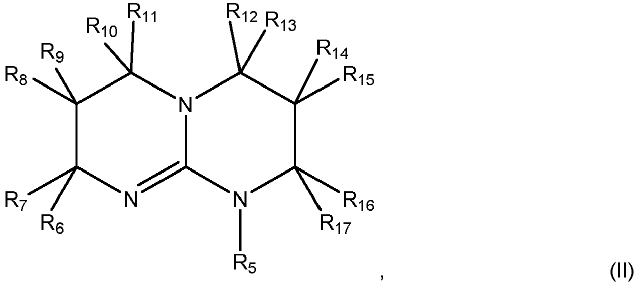
- in der Rs bis R₁₇ unabhängig voneinander ausgewählt aus ggf. substituierten C₁-C₁₄-Resten und H sein können und/oder
- R₆ und R₇ und/oder R₅ und R₉ und/oder R₁₀ und R₁₁ und/oder R₁₂ und R₁₃ und/oder R₁₄ und R₁₅ und/oder R₁₆ und R₁₇ zusammen jeweils einen ggf. substituierten C₃-, C₄-, C₅- oder C₆-Alkylenrest oder einen ggf. entsprechenden, bevorzugt mit N oder O substituierten, Heteroalkylenrest darstellen und/oder
- R₇ und R₅ und/oder R₉ und R₁₀ und/oder R₁₁ und R₁₂ und/oder R₁₃ und R₁₄ und/oder R₁₅ und R₁₆ und/oder R₁₇ und R₅ zusammen jeweils einen ggf. substituierten C₂-, C₃-, C₄-oder C₅-Alkylenrest oder einen ggf. entsprechenden, bevorzugt mit N oder O substituierten, Heteroalkylenrest darstellen.

Bevorzugte Guanidinbasen sind weiterhin Bartons Base (2-tert.-butyl-1,1,3,3-tetramethylguanidin), Murphys Guanidin, 1,5,7-Triazabicyclo[4.4.0]dec-5-en (TBD), Pentamethylguanidin, tert.-Butyltetra-methylguanidin (BTMG), sowie Umsetzungsprodukte von Oligocarbodiimiden oder Polycarbodiimiden mit Aminen oder von Polyaminen mit Carbodiimiden.

Die Guanidin-Basen können Monomere sein. Vorzugsweise weisen sie ein Molgewicht von ≥ 115 g/mol auf. Es können aber auch oligomere oder polymere Guanidine eingesetzt werden, wie sie beispielsweise bei der Umsetzung von Oligocarbodiimiden oder Polycarbodiimiden mit Aminen entstehen - oder bei der Umsetzung von Polyaminen mit Carbodiimiden. Die Guanidinbasen können auch polymergebunden ("supported") eingesetzt werden, zum Beispiel als Polystyrolgebundenes TBD, oder polymer-modifiziert, wie beispielsweise als StratoSpheres™ PL-TBD Harz. Auch sind Silikagel-gebunde Guanidinbasen wie z. B. Silika-gebundenes TBD geeignet, oder auch lonic Liquid funktionalisierte Guanidinbasen wie z. B. 1-Methyl-3-(4'-TBD-butyl)imidazoliumbromid.

Bevorzugt beträgt die Katalysatorkonzentration 0,01 - 10 Gew.-%, bevorzugt 0,05 - 5 Gew.-%, bezogen auf die Gesamtmenge aller anderen an der Reaktionsmischung beteiligten Komponenten.

Bevorzugt ist das Molverhältnis von Alkoxysilanoalkylamin und Dialkylcarbonat kleiner 1 : 10, vorzugsweise kleiner 1 : 5. Bevorzugt wird die Umsetzung mit Dialkylcarbonat über eine Zeit von 1 - 20 h, vorzugsweise 2 - 10 h, bei einer Temperatur von 5 - 100 °C, vorzugsweise 15 - 85 °C durchgeführt. Bevorzugt wird die Reaktion bei Atmosphärendruck durchgeführt.

Die Umsetzung der Alkoxysilanoalkylamine in Reaktionsstufe A) wird bevorzugt so durchgeführt, dass Alkoxysilanoalkylamine der Formel (1), optional in Zumischung von insbesondere aus dem Sumpfmaterial der nachfolgenden Spaltreaktion stammenden Alkoxysilanoalkylurethanen der Formel (2),

R³ₘ(OR²)₃₋ₘSi-R¹-NH-(C=O)-OR⁴ (2),

wobei R⁴, R³, R² und R¹ unabhängig voneinander gleiche oder verschiedene Kohlenwasserstoffreste mit 1 - 6 C-Atomen bedeuten, wobei diese linear, verzweigt oder cyclisch sein können, und m gleich 0 - 2 bedeutet,
in Gegenwart einer Guanidinbase als Katalysator mit Dialkylcarbonat über 1 - 20 h, vorzugsweise 2 - 10 h, bei 5 -100 °C, vorzugsweise 15 - 85 °C, zur Reaktion gebracht wird, wobei das Molverhältnis von Alkoxysilanoalkylamin und Dialkylcarbonat kleiner 1 : 10, vorzugsweise kleiner 1:5 beträgt.

Die optionale Zumischung des Alkoxysilanoalkylurethans zur Reaktionsmischung kann vor dem Start der Umsetzung erfolgen, aber auch im Verlauf der Umsetzung, punktuell oder kontinuierlich.

Weiterhin kann der Reaktionsmischung in analoger Weise Alkohol zugemischt werden, vorzugsweise Methanol, Ethanol, Propanol, Butanol, Pentanol oder Hexanol.

Die Umsetzung kann im Batchreaktor, in einer kontinuierlich betriebenen Kesselkaskade oder einem Rohreaktor durchgeführt werden. Bevorzugt wird die Reaktion in einer kontinuierlich betriebenen Kesselkaskade oder einem Rohreaktor durchgeführt.

In Schritt B) wird gleichzeitig oder aufeinander folgend der i) Katalysator abgetrennt und/deaktiviert, und es werden ii) Leichtsieder, iii) Feststoffe sowie Salzfrachten und/oder iv) Hochsieder entfernt. Es kann also zunächst der Katalysator abgetrennt und/oder deaktiviert und dann Leichtsieder, Feststoffe, Salzfrachten und/oder Hochsieder entfernt werden. Auch können zunächst Leichtsieder, Feststoffe, Salzfrachten und/oder Hochsieder entfernt und dann der Katalysator abgetrennt und/oder deaktiviert werden. Möglich ist auch, beide Teilschritte gleichzeitig durchzuführen. Bevorzugt wird jedoch zunächst der i) Katalysator abgetrennt und/oder deaktiviert und dann werden ii) Leichtsieder, iii) Feststoffe sowie Salzfrachten und/oder iv) Hochsieder entfernt.

Eine Deaktivierung des Katalysators in Schritt B) kann bevorzugt über eine Neutralisation erfolgen. Bevorzugt wird der Katalysator mit anorganischer oder organischer Säure, bevorzugt einer Poly- oder Monocarbonsäure mit 1 - 20 Kohlenstoffatomen neutralisiert. Bevorzugt wird der Katalysator mit Essigsäure und weiter bevorzugt im stöchiometrischen Überschuss, bezogen auf die eingesetzte Mengen des Katalysators in A), neutralisiert.

Die Neutralisation der umgesetzten Reaktionsmischung mit anorganischer oder organischer Säure wird bevorzugt in einem Molverhältnis von Säure und Katalysator von 0,6 : 1 bis 4 : 1, vorzugsweise 0,9 : 1 bis 3,5 : 1 durchgeführt. Dabei wird darauf geachtet, die Temperatur der Reaktionsmischung zwischen 5 °C und 85 °C, vorzugsweise zwischen 15 °C und 75 °C zu halten. Zu Einhaltung des Temperaturfensters kann die Reaktionsmischung einer aktiven Kühlung, z. B. mittels Wärmetauscher, unterworfen werden, oder die Temperaturentwicklung wird über die Dosiergeschwindigkeit des Neutralisationsmittels gesteuert. Als Neutralisationsmittel kommen bevorzugt organische Säuren zum Einsatz. Bevorzugt sind Essigsäure, Propansäure, Butansäure, Hexansäure, Bernsteinsäure, Maleinsäure, Sebazinsäure, Benzolsulfonsäure und Marlon® AS.

Eine Deaktivierung des Katalysators ist jedoch nicht zwangsläufig erforderlich. Insbesondere, wenn hochmolekulare, und damit hochsiedende Guanidinbasen als Katalysator eingesetzt werden, wird bevorzugt die Neutralisation nicht durchgeführt, da so der Katalysator am einfachsten reckcliert werden kann und Salzfrachten vermieden werden. In einem entsprechenden bevorzugten Verfahren wird somit der Katalysator nur abgetrennt und keine Neutralisation durchgeführt.

Bevorzugt wird die Entfernung der Leichtsieder, Feststoffe, Salzfrachten und/oder Hochsieder in drei separaten Teilschritten durchgeführt. Weiter bevorzugt können die Leichtsieder destillativ, optional die Feststoffe und/oder Salzfrachten über Filtration oder Zentrifugation, und die Hochsieder über Dünnschichtverdampfung abgetrennt werden. Dabei werden vorzugsweise zunächst B) ii) die Leichtsieder destillativ abgetrennt, dann optional B) iii) die Feststoffe und/oder Salzfrachten abfiltriert oder abzentrifugiert und B) iv) schließlich die Hochsieder über Dünnschichtverdampfung abgetrennt. Insbesondere sofern keine Feststoffe anfallen und keine Deaktivierung des Katalysators durch Neutralisation durchgeführt wird und aufgrund dessen keine Salzfrachten anfallen, kann auch auf die Abfiltration bzw. Abzentrifugation der Feststoffe und/oder Salzfrachten verzichtet werden.
Die destillative Abtrennung der Leichtsieder B) ii), bestehend bevorzugt aus Alkohol und Dialkylcarbonat, wird bevorzugt bei Temperaturen von 40 - 200°C, weiter bevorzugt bei 50 - 180°C, ganz besonders bevorzugt bei 55 - 75 °C, bei vermindertem Druck durchgeführt.

Die Leichtsieder, wie beispielsweise der im Zuge der Umsetzung freigesetzte Alkohol und überschüssiges Dialkylcarbonat, können bevorzugt bei 40 - 200°C, weiter bevorzugt bei 50 - 180°C, besonders bevorzugt bei 55 - 75°C, bei bevorzugt 20 - 800 mbar, weiter bevorzugt 50 - 600 mbar, destillativ abgetrennt werden. Die Abtrennung kann ein- oder mehrstufig durchgeführt werden. Dies kann prinzipiell im Batch mit einer aufgesetzten Destillationskolonne erfolgen, vorzugsweise werden aber Fallfilmverdampfer, Dünnschichtverdampfer oder Umlaufverdampfer eingesetzt.

Die optionale Filtration bzw. Zentrifugation B) iii) wird bevorzugt bei Temperaturen von 30 - 90°C, weiter bevorzugt bei 50 - 70°C, ganz besonders bevorzugt bei 60°C, durchgeführt.

Die Filtration kann über Membrane, Adsorber oder Fasermatten erfolgen, durch Vakuum- oder Druckfiltration, in einem Temperaturbereich von 30 - 90°C, vorzugsweise 50 - 70°C, besonders bevorzugt bei 60°C. Alternativ zur Filtration kann die Trennung von Fest- und Flüssigphase auch mit Hilfe einer Zentrifuge durchgeführt werden.

Durch die optionale Filtration bzw. Zentrifugation B) iii) nicht hinreichend entfernte Verunreinigungen können durch eine weitere optionale Aufreinigung entfernt werden. Dazu wird das Gemisch bei einem Druck von 1 - 30 mbar, vorzugsweise 2 - 20 mbar, und bei einer Temperatur von 80 - 220°C, bevorzugt 100 - 200°C über einen Kurzweg- oder Dünnschichtverdampfer gefahren, so dass Destillat und Ablauf in einem Verhältnis von größer 80 Gew.-% zu 20 Gew.-%, vorzugsweise 85 Gew.-% zu 15 Gew.-% anfallen.

Die Dünnschichtverdampfung des erhaltenen Destillats aus B) ii) bzw. des Filtrats bzw. Permeats aus dem optionalen Schritt B) iii) wird bevorzugt bei einem Druck von 1 - 30 mbar, vorzugsweise 2 - 20 mbar und einem Schnittverhältnis Destillat/Rückstand von größer 80 Gew.-% zu 20 Gew.-%, vorzugsweise größer 85 Gew.-% zu 15 Gew.-% durchgeführt. Dabei kann der Rückstand bevorzugt in die Urethansynthese A) oder den Aufreinigungsschritt B) rückgeführt werden. Bevorzugt wird der Rückstand in die Urethansynthese A) oder in den optionalen Filtrationsschritt B) iii) geführt.

In der thermischen Spaltung C) entsteht Alkoxysilangruppen-haltiges Isocyanat und Nebenprodukt, bevorzugt Alkohol. Bevorzugt wird die thermische Spaltung ohne Lösemittelzugabe durchgeführt.

Die thermische Spaltung in Schritt C) wird bevorzugt in Gegenwart eines Katalysators kontinuierlich und lösemittelfrei bei einer Temperatur von 150 bis 280°C, vorzugsweise 165 bis 265 °C, und unter einem Druck von 0,5 - 200 mbar, vorzugsweise 1,0 - 100 mbar, durchgeführt. Die Katalysatorkonzentration beträgt bevorzugt 0,5 - 100 ppm, vorzugsweise 1 - 60 ppm, besonders bevorzugt 2 - 30 ppm.

Bei der thermischen Spaltung wird bevorzugt ein Teil des Reaktionsgemisches, bevorzugt 1 bis 90 Gew.-% bezogen auf den Feed, vorzugsweise 5 bis 60 Gew.-% bezogen auf den Feed, ständig aus dem Sumpf ausgeschleust. Entsprechend werden bevorzugt entsprechende Mengen an Sumpfmaterial aus der Spaltapparatur ausgeschleust.

Die thermische Spaltung erfolgt dabei bevorzugt partiell, d.h. der Umsatz von Produkt aus Schritt B)/Destillat zu Alkoxysilangruppen-haltigem Isocyanat wird frei gewählt und liegt üblicherweise in einem Bereich von 10 - 95 Gew.%, vorzugsweise 20 - 85 Gew.% der zugeführten Menge (Feed). Bevorzugt wird ein Teil des Reaktionsgemisches, das neben nicht umgesetzten Urethan der Formel (2) hochsiedende Nebenprodukte und andere wiederverwertbare und unverwertbare Nebenprodukte enthält, kontinuierlich aus dem Sumpf ausgeschleust. Die Menge der Ausschleusung richtet sich u.a. nach dem gewünschten Umsatz und der gewünschten Kapazität der Spaltreaktion und kann leicht experimentell ermittelt werden. Sie beträgt üblicherweise 1 bis 90 Gew.-%, vorzugsweise 5 bis 60 Gew.-% bezogen auf den Feed.

Als Katalysator zur chemischen Spaltung der Alkoxysilangruppen-haltigen Urethane finden zum Beispiel die Urethanbildung katalysierende anorganische und organische Verbindungen Verwendung. Vorzugsweise werden Chloride des Zinks oder Zinns sowie Zink-, Mangan-, Eisen- oder Cobaltoxide eingesetzt, wobei der Katalysator dem im wesentlichen Urethan enthaltenden Stoffstrom aus dem Reinigungsschritt B), insbesondere dem Stoffstrom aus Schritt B) iv) und ggf. weiteren recyclierten Strömen vor ihrer Zuführung in die Spaltung als 0,01 - 25 Gew.-%ige, vorzugsweise 0,05 - 10 Gew.-%ige Lösung oder Suspension in Alkohol, in einer Menge von 0,5 - 100 ppm, vorzugsweise 1 - 60 ppm, besonders bevorzugt 2 - 30 ppm zudosiert wird. Grundsätzlich, aber nicht bevorzugt, kann die Urethanspaltung auch ohne Katalysatorzusatz durchgeführt werden.

Überraschend hat sich gezeigt, dass eine niedrige Katalysatorkonzentration die Selektivität der im Spaltsumpf stattfindenden chemischen Umsetzungen zugunsten der gewünschten thermischen Spaltung unter Freisetzung des Zielprodukts fördert, während sowohl zu hohe Katalysatorkonzentrationen als auch die Abwesenheit des Spaltkatalysators zu einer erhöhten Nebenproduktbildung führen. Die optimale Katalysatorkonzentration kann auf Grundlage dieser Beobachtung leicht experimentell ermittelt werden.

Als Spaltvorrichtungen eignen sich bevorzugt zylinderförmige Spaltreaktoren, wie z. B. Röhrenöfen oder vorzugsweise Verdampfer, beispielsweise Fallfilm-, Dünnschicht- oder Bulkverdampfer wie z. B. Robertverdampfer, Herbertverdampfer, Caddle-Typ-Verdampfer, Oskarverdampfer und Heizkerzenverdampfer.

Prinzipiell geht es darum, die mittlere Verweilzeit der Isocyanatgruppen, die bei der Deblockierung des Alkohols zwangsläufig freigesetzt werden, in der Spaltzone möglichst gering zu halten und so unerwünschte Nebenreaktionen auf ein Minimum zu beschränken. Bevorzugt wird die Spaltung in einer kombinierten Spalt- und Rektifizierkolonne durchgeführt, die für die Energiezufuhr im Sumpf mit einem Fallfilmverdampfer, im oberen Teil mit einer Einrichtung zum Abzug von Produkt bzw. Rohprodukt und am Kopf mit einem Kondensator für den Rückfluss und den Abzug von Alkohol ausgestattet ist. Optional können im unteren Drittel noch Einrichtungen zum zusätzlichen Energieeintrag installiert sein.

Die bei der thermischen Spaltung gebildeten Spaltprodukte, die sich vor allem aus Alkohol und Alkoxysilangruppen-haltigem Isocyanat zusammensetzen, können bevorzugt durch Rektifikation bei Temperaturen von 150 - 280 °C, vorzugsweise 165 -265 °C, und einem Druck von 0,5 - 200 mbar, vorzugsweise 1 - 100 mbar, in Alkohol und Alkoxysilangruppen-haltiges Isocyanat getrennt werden, wobei das Isocyanat u.a. ggf. noch Anteile am zugrundeliegenden Urethan enthält. Diese Trennung kann beispielsweise in der Spaltkolonne der obengenannten kombinierten Spalt- und Rektifizierkolonne durchgeführt werden.

Das Hochsieder enthaltende Sumpfmaterial der Spaltapparatur kann im Anschluss bevorzugt thermisch behandelt und/oder aufgereinigt und/oder in Gegenwart von Alkohol einer Nachbehandlung unterzogen werden und wird dann bevorzugt in Schritt A), B) oder C) erneut zugeführt. Damit kann der Hochsiederanteil verringert sowie der Wertstoffanteil der Stoffmischung erhöht werden. Besonders bevorzugt wird das Sumpfmaterial abgeführt, aufgereinigt und im Sumpfmaterial vorhandene Isocyanate erneut mit Alkohol behandelt und das aufgereinigte Sumpfmaterial wieder in Schritt A), B) oder C) zugeführt. Ganz besonders bevorzugt wird das Sumpfmaterial abgeführt, thermisch behandelt, aufgereinigt und das aufgereinigte Sumpfmaterial wieder in Schritt A), B) oder C) zugeführt.

Besonders bevorzugt wird das thermisch behandelte und/oder aufgereinigte und/oder mit Alkohol nachbehandelte Sumpfmaterial in Schritt B) oder C) wieder zugeführt, da dann Ablagerungen in der Urethansynthese vermieden werden können und die Ausbeuten höher sind.

Die thermische Nachbehandlung erfolgt bevorzugt bei einer Temperatur von 150 - 250 °C über einen Zeitraum von 0,2 bis 4 h, weiter bevorzugt bei 190 - 250 °C über einen Zeitraum von 0,5 - 1,5 h bei Normaldruck.

Der Aufreinigungsschritt erfolgt bevorzugt destillativ. Dabei wird bevorzugt das ausgeschleuste Sumpfmaterial bei vermindertem Druck, weiter bevorzugt im Vakuum, und einer Temperatur von 150 - 250 °C so destilliert, dass im Sumpf entstandenes Alkoxysilanoalkylisocyanat und/oder Alkoxysilanoalkylurethan von den Hochsiedern abgetrennt wird. Das erhaltene Destillat kann Schritt B) oder C) des Verfahrens zugeführt werden. Bevorzugt wird das erhaltene Destillat der Dünnschichtverdampfung B) iv) oder der Spaltung D) zugeführt.

Die Sumpfausschleusung aus der Spaltstufe C) enthält neben nicht umgesetzten Urethan zudem hochsiedende Nebenprodukte und andere wiederverwertbare und unverwertbare Nebenprodukte. Der wiederverwertbare Anteil, d.h. der Wertstoffanteil der Stoffmischung - und dadurch die Gesamtausbeute des Verfahrens - kann durch eine gezielte thermische Nachbehandlung in Kombination mit einer destillativen Aufreinigung, insbesondere durch Reaktivdestillation, des Materials erhöht werden. Das Material wird in einen Wertstoff- und eine Abfallstrom aufgetrennt, wobei der an Hochsiedern reiche Abfallstrom aus dem Prozess ausgeschleust und verworfen bzw. recycliert wird. Bevorzugt ist die Aufarbeitung des Sumpfmaterials über thermische Behandlung und Aufreinigung eine Reaktivdestillation.

Das ausgeschleuste Sumpfmaterial umfassend Alkoxysilanoalkylisocyanat und/oder Alkoxysilanoalkylurethan kann weiter bevorzugt mit oder ohne vorhergehenden Aufreinigungsschritt einer ggf. weiteren Nachbehandlung unterzogen werden, um den Wertstoffanteil der Stoffmischung zu erhöhen. Dazu wird das ggf. destillierte Sumpfmaterial in Gegenwart eines Alkohols der Formel R²OH mit R² = linearer, verzweigter oder cyclischer Kohlenwasserstoffrest mit 1 - 6 C-Atomen bei 25 - 100 °C in Gegenwart oder Abwesenheit eines Katalysators umgesetzt. Als Katalysatoren kommen alle Kontakte in Frage, die die NCO/OH-Reaktion fördern, z. B. Zinnoctoat, Dibutylzinnlaurat, Zinndichlorid, Zinkdichlorid oder Triethylamin. Das Molverhältnis von NCO-Gruppen und OH-Gruppen beträgt bevorzugt bis zu 1 : 100, vorzugsweise bis zu 1 : 60 und besonders bevorzugt bis zu 1 : 30. Die Reaktion kann in einem Batchreaktor, einer Kaskade oder auch in einem Rohrreaktor in Abwesenheit oder Gegenwart eines Katalysators durchgeführt werden. Bevorzugt wird die Reaktion in einer Kaskade oder in einem Rohrreaktor durchgeführt. Dabei werden entstandene Alkoxysilanoalkylisocyanate zu den entsprechenden Urethanen umgesetzt ("Reurethanisierung"). Der erhaltene Produktstrom kann bevorzugt der Urethansynthese A), dem Aufreinigungsschritt B) oder der Spaltung C) zugeführt werden. Besonders bevorzugt kann der erhaltene Produktstrom der Urethansynthese A), dem Destillationsschritt B) ii) oder der Spaltung C) zugeführt werden. Überschüssiger Alkohol wird dabei vorher bevorzugt ganz oder teilweise abgetrennt.

Die Schritte thermische Nachbehandlung und Auftrennung in Wertstoff- und Abfallstrom und Reurethanisierung können nacheinander oder parallel durchgeführt werden. So eignet sich für die thermische Nachbehandlung beispielsweise ein Batchreaktor, wobei die Auftrennung der Komponenten im Anschluss in einer Destillationskolonne oder mit Hilfe eines Fallfilm-, Kurzweg- oder Dünnschichtverdampfers erfolgen kann, beispielsweise durch Rückführung in die Hochsiederabtrennung B) iv). Weniger bevorzugt kann die Trennoperation auch durch Extraktion erfolgen. Alternativ können auch die Schritte in einem Fallfilm-, Dünnschicht- oder Kurzwegverdampfer erfolgen und es können auch mehrere hintereinander- oder parallel geschaltete Verdampfer zum Einsatz kommen.

Die thermische Nachbehandlung kann in Gegenwart oder Abwesenheit typischer Urethanisierungskatalysatoren erfolgen. Es kann auch vollständig auf die thermische Nachbehandlung verzichtet werden, man verschenkt durch diese Maßnahme jedoch Ausbeutepotenzial.

Bei gegebener Kapazität sind für eine möglichst optimale Erhöhung des Wertstoffanteils u.a. die Parameter Verweilzeit und Temperatur der thermischen Nachbehandlung entscheidend, deren Optimum von Dimensionierung und Grundaufbau der verfahrenstechnischen Konfiguration abhängen und sich vom Fachmann leicht experimentell ermitteln lassen.

In einer besonders bevorzugten erfindungsgemäßen Variante wird die Sumpfausschleusung aus der Spaltstufe C) einer Dünnschichtverdampfung bei bevorzugt 150 - 250 °C, weiter bevorzugt bei 165 - 235 °C, und bei einem Druck von 1 - 40 mbar, vorzugsweise 2 - 20 mbar, unterzogen. Der im wesentlichen Hochsieder enthaltende Ablauf des Dünnschichtverdampfers kann dadurch aus dem Prozess ausgeschleust und das die Wertstoffe enthaltende Destillat in den Prozess recycliert werden.

In Schritt D) wird Alkoxysilangruppen- haltiges Isocyanat und Nebenprodukt, bevorzugt Alkohol, vom Sumpfmaterial getrennt und aufgefangen. Weiter bevorzugt wird Alkoxysilangruppen-haltiges Isocyanat und Nebenprodukt voneinander getrennt, bevorzugt durch Rektifikation.

Weiter bevorzugt wird das durch Rektifikation erhaltene Isocyanat durch Destillation zusätzlich gereinigt und isoliert ("Reinisocyanat").

Das vorzugsweise durch Rektifikation erhaltene Alkoxysilangruppen enthaltende Isocyanat kann optional durch Destillation bei einer Temperatur von 80 - 220 °C, vorzugsweise 100 -200 °C und unter einem Druck von 0,5 - 200 mbar, vorzugsweise 1 - 100 mbar, weiter aufgereinigt und als hochreines Produkt isoliert werden.

Die nach dem Verfahren herstellbaren Isocyanate haben bevorzugt die Formel (3)

R³ₘ(OR²)₃₋ₘSi-R¹-NCO (3)

wobei R³, R² und R¹ unabhängig voneinander gleiche oder verschiedene Kohlenwasserstoffreste mit 1 - 6 C-Atomen bedeuten, wobei diese verzweigt sein können, und m gleich 0 - 2 bedeutet. Bevorzugt ist m = 0. R¹ ist bevorzugt Propyl. R² ist bevorzugt Methyl oder Ethyl. Ganz besonders bevorzugt sind Verbindungen mit m gleich 0 und R¹ gleich Methyl oder Propyl, und R² gleich Methyl oder Ethyl.

Ganz besonders geeignet ist das erfindungsgemäße Verfahren zur Herstellung von Isocyanatopropyltrimethoxysilan und Isocyanatopropyltriethoxysilan.

Vorteile des erfindungsgemäßen Verfahrens sind insbesondere, dass Alkoxysilangruppen-haltige Isocyanate bei hoher Anlagenverfügbarkeit im kontinuierlichen Betrieb mit hohen Ausbeuten hergestellt werden können. Vorteilhaft beim erfindungsgemäßen Mehrstufenverfahren ist insbesondere die Tatsache, dass bei Einsatz von Alkoxysilanoalkylaminen der Formel (1) als Ausgangsmaterial für die kontinuierliche Herstellung von Alkoxysilangruppen-haltigen Isocyanaten Ablagerungen, die insbesondere durch die von Natur aus höherviskosen Hochsiederkomponenten begünstigt werden, weitgehend vermieden werden können und auch langfristig eine gute Anlagenverfügbarkeit und eine gute Verfahrensausbeute gewährleistet ist. Weiterhin ist es ein Vorteil des erfindungsgemäßen Mehrstufenverfahrens, dass es erlaubt, die Verfahrensausbeute aufgrund der nachgeschalteten thermischen Nachbehandlung - z. B. durch Reaktivdestillation - zusätzlich zu steigern und auf diese Weise eine effizientere Rohstoffnutzung fördert.

Die oben beschriebene optionale Sequenz aus thermischer Nachbehandlung - z. B. durch Reaktivdestillation - der Sumpfausschleusung, Trennung in Wert- und Abfallstoffe, Urethanisierung der Wertstoffe und Rückführung des urethanisierten Wertstoffstroms in den Prozess, kann grundsätzlich auch in der folgenden Reihenfolge durchgeführt werden: Urethanisierung der Sumpfausschleusung, thermische Nachbehandlung, Trennung in Wert- und Abfallstoffe und Rückführung in den Prozess.

Mit dem erfindungsgemäßen mehrstufigen Verfahren zur kontinuierlichen Herstellung von Alkoxysilangruppen enthaltenden Isocyanaten unter Rückführung und Ausschleusung der Nebenprodukte kann für einen langen Zeitraum ein mit hoher Selektivität störungsfrei laufender Prozess gewährleistet werden. Das erfindungsgemäße Verfahren eignet sich zur Herstellung von Alkoxysilangruppen enthaltenden Isocyanaten mit 1 - 16 C-Atomen zwischen dem Si-Atom und der Isocyanatgruppe, insbesondere aber zur Herstellung von Isocyanatopropyltrimethoxysilan und Isocyanatopropyltriethoxysilan.

Die hergestellten Alkoxysilangruppen enthaltenden Isocyanate eignen sich für die Anwendung in Beschichtungen auf unterschiedlichen Substraten, Dichtstoffen, Klebstoffen und Elastomermaterialien - oder auch zur gezielten Modifizierung von Harzen oder diskreten Molekülen - ohne allerdings auf diese Einsatzfelder beschränkt zu sein.

Die Erfindung wird durch folgende Beispiele näher erläutert:

### Katalysatoren für die Urethanherstellung

### Kat. 1:

1,5,7-Triazabicyclo[4.4.0]dec-5-en

### Kat.2:

Eine Lösung von 412 g Dicyclohexylcarbodiimid und 245 g Jeffamin D-230 in 1 I Tetrahydrofuran (trocken) wurde bis zur vollständigen Umsetzung aller Carbodiimidgruppen bei Raumtemperatur gerührt. Im Anschluss wurde das Lösemittel im Vakuum entfernt und der gebildete Guanidingruppen enthaltende Katalysator (Kat.2) unter Schutzgas gelagert.

### Beispiel 1: Herstellung von 3-(Trimethoxysilyl)propylisocyanat - Reurethanisierung der Sumpfausschleusung und Rückführung in Dünnschichtverdampfung.

15,10 kg AMMO (Aminopropyltrimethoxysilan) wurden in Gegenwart von 0,38 kg Kat.2 für 8 h bei 60 °C mit 15,18 kg DMC (Dimethylcarbonat) zur Reaktion gebracht. Der Reaktoraustrag wurde durch Dünnschichtverdampfung bei 142°C und 260 mbar von den Leichtsiedern befreit und das Roh-UPMS bei 50 °C über einen Kerzenfilter filtriert und der Filtratstrom einem weiteren Reinigungsschritt durch Dünnschichtverdampfung bei 182 °C und 5 mbar unterzogen. Das DSV-Destillat (23,5 kg/h) wurde kontinuierlich in die Wälzung der Spalt- und Rektifizierkolonne gefahren, wobei die Deblockierungsreaktion bei einer Temperatur von 195 °C und einem Sumpfdruck von 55 mbar in Gegenwart einer stationären Konzentration an Zinndichlorid von 55 ppm durchgeführt wurde. Die Spaltgase IPMS (3-(Trimethoxysilyl)propylisocyanat) und Methanol wurden in zwei hintereinanderliegenden Kondensatoren auskondensiert, wobei das als Kopfprodukt anfallende Methanol nach weiterer Destillation wieder als Rohstoff eingesetzt werden kann, und das IPMS mit einer Reinheit von > 98 % in einer Menge von 14,82 kg/h am Seitenabzug entnommen wurde, was einer kont. Ausbeute von 84 % entspricht. Zur Aufrechterhaltung der Massenbilanz innerhalb der Spalt- und Rektifizierkolonne, Vermeidung von Belegungen und ggf. Verstopfungen der Spaltapparatur, und zur Regenerierung von Wertstoffen wurde kontinuierlich ein Teilstrom aus dem Wälzkreislauf ausgeschleust, abgekühlt, mit Methanol zusammengeführt und der kombinierte Strom (10,0 kg/h) in einem Rohreaktor bei 65°C bis zur vollständigen Urethanisierung aller NCO-Gruppen umgesetzt. Der Reurethanisatstrom wurde in die DSV-Stufe recycliert.

### Beispiel 2: Herstellung von 3-(Trimethoxysilyl)propylisocyanat - thermische Nachbehandlung und Trennung der Sumpfausschleusung, Reurethanisierung und Rückführung in die Urethanherstellung.

12,25 kg AMMO (Aminopropyltrimethoxysilan) wurden in Gegenwart von 0,31 kg Kat.2 für 9 h bei 60 °C mit 12,93 kg DMC (Dimethylcarbonat) zur Reaktion gebracht. Der Reaktoraustrag wurde durch Dünnschichtverdampfung bei 138 °C und 250 mbar von den Leichtsiedern befreit und das Roh-UPMS (Methyl 3-(Trimethoxysilyl)propylcarbamat) im weiteren Reinigungsschritt durch Dünnschichtverdampfung bei 185 °C und 5 mbar unterzogen. Das DSV-Destillat (18,86 kg/h) wurde kontinuierlich in die Wälzung der Spalt- und Rektifizierkolonne gefahren, wobei die Deblockierungsreaktion bei einer Temperatur von 193 °C und einem Sumpfdruck von 55 mbar in Gegenwart einer stationären Konzentration an Zinndichlorid von 47 ppm durchgeführt wurde. Die Spaltgase IPMS (3-(Trimethoxysilyl)propylisocyanat) und Methanol wurden in zwei hintereinanderliegenden Kondensatoren auskondensiert, wobei das als Kopfprodukt anfallende Methanol nach weiterer Destillation wieder als Rohstoff eingesetzt werden kann, und das IPMS mit einer Reinheit von > 98 % in einer Menge von 12,32 kg/h am Seitenabzug entnommen wurde, was einer kont. Ausbeute von 86 % entspricht. Zur Aufrechterhaltung der Massenbilanz innerhalb der Spalt- und Rektifizierkolonne, Vermeidung von Belegungen und ggf. Verstopfungen der Spaltapparatur, und zur Regenerierung von Wertstoffen wurde kontinuierlich ein Teilstrom aus dem Wälzkreislauf ausgeschleust und bei 215 °C und 5 mbar über einen Dünnschichtverdampfer gefahren. Die Destillatstrom wurde mit Methanol zusammengeführt und der kombinierte Strom (7,5 kg/h) in einem Rohreaktor bei 65 °C bis zur vollständigen Urethanisierung aller NCO-Gruppen umgesetzt. Der Reurethanisatstrom wurde in die UPMS-Herstellung recycliert.

### Beispiel 3: Herstellung von 3-(Trimethoxysilyl)propylisocyanat - thermische Nachbehandlung und Trennung der Sumpfausschleusung und Rückführung in die Urethanspaltung.

13,92 kg AMMO (Aminopropyltrimethoxysilan) wurden in Gegenwart von 0,18 kg Ka1.1 für 7 h bei 60 °C mit 15,38 kg DMC (Dimethylcarbonat) zur Reaktion gebracht und im Anschluss durch Zugabe von 0,13 kg Essigsäure neutralisiert. Der Reaktoraustrag wurde durch Dünnschichtverdampfung bei 140 °C und 255 mbar von den Leichtsiedern befreit und das Roh-UPMS einem weiteren Reinigungsschritt durch Dünnschichtverdampfung bei 185 °C und 5 mbar unterzogen. Das DSV-Destillat wurde kontinuierlich in die Wälzung der Spalt- und Rektifizierkolonne gefahren, wobei die Deblockierungsreaktion bei einer Temperatur von 196 °C und einem Sumpfdruck von 60 mbar in Gegenwart einer stationären Konzentration an Zinndichlorid von 29 ppm durchgeführt wurde. Die Spaltgase IPMS (3-(Trimethoxysilyl)propylisocyanat) und Methanol wurden in zwei hintereinanderliegenden Kondensatoren, die auf unterschiedlichen Temperaturniveaus betrieben wurden, auskondensiert, wobei das als Kopfprodukt anfallende Methanol nach weiterer Destillation wieder als Rohstoff eingesetzt werden kann, und das IPMS mit einer Reinheit von > 98 % in einer Menge von 14,01 kg/h am Seitenabzug entnommen wurde, was einer kont. Ausbeute von 88 % entspricht. Zur Aufrechterhaltung der Massenbilanz innerhalb der Spalt- und Rektifizierkolonne, Vermeidung von Belegungen und ggf. Verstopfungen der Spaltapparatur, und zur Regenerierung von Wertstoffen wurde kontinuierlich ein Teilstrom aus dem Wälzkreislauf ausgeschleust, bei 220 °C mit einer Verweilzeit von 70 min. thermisch nachbehandelt, und anschließend bei 5 mbar über einen Dünnschichtverdampfer gefahren. Der Destillatstrom wurde in den Wälzkreislauf recycliert.

### Beispiel 4: Diskont. Herstellung von 3-(Trimethoxysilyl)propylisocyanat - Deblockierung im Batch

13,39 kg AMMO (Aminopropyltrimethoxysilan) wurden in Gegenwart von 0,17 kg Kat.1 für 7 h bei 60 °C mit 12,69 kg DMC (Dimethylcarbonat) zur Reaktion gebracht und im Anschluss durch Zugabe von 0,12 kg Essigsäure neutralisiert. Der Reaktoraustrag wurde durch Dünnschichtverdampfung bei 140 °C und 252 mbar von den Leichtsiedern befreit und das Roh-UPMS einem weiteren Reinigungsschritt durch Dünnschichtverdampfung bei 183 °C und 5 mbar unterzogen. 350 g des DSV-Destillats wurden in einem 3 I-Rundkolben mit Destillationsaufsatz, Rührer und Thermometer in Gegenwart von 107 ppm Zinndichlorid und einem Druck von 60 mbar auf eine Temperatur von 195 °C erhitzt. Die entstehenden Spaltgase wurden destillativ getrennt und auskondensiert. Nach 6,5 h wurde der Versuch abgebrochen, nachdem in der Destillation kein Produktstrom mehr anfiel. Insgesamt wurden 208,2 g IPMS mit einer Reinheit von 97,5 % erhalten (ca. 67 % Ausbeute), im Rundkolben blieben 95,8 g Schwersieder zurück.

### Beispiel 5: Herstellung von 3-(Trimethoxysilyl)propylisocyanat - mit Sumpfausschleusung und ohne Rückführung in den Prozess.

12,93 kg AMMO (Aminopropyltrimethoxysilan) wurden in Gegenwart von 0,34 kg Kat.2 für 6 h bei 60 °C mit 12,05 kg DMC (Dimethylcarbonat) zur Reaktion gebracht. Der Reaktoraustrag wurde durch Dünnschichtverdampfung bei 145 °C und 250 mbar von den Leichtsiedern befreit und das Roh-UPMS einem weiteren Reinigungsschritt durch Dünnschichtverdampfung bei 185 °C und 5 mbar unterzogen. Das DSV-Destillat (16,08 kg/h) wurde kontinuierlich in die Wälzung der Spalt- und Rektifizierkolonne gefahren, wobei die Deblockierungsreaktion bei einer Temperatur von 195°C und einem Sumpfdruck von 55 mbar in Gegenwart einer stationären Konzentration an Zinndichlorid von 110 ppm durchgeführt wurde. Die Spaltgase IPMS und Methanol wurden in zwei hintereinanderliegenden Kondensatoren auskondensiert, wobei das als Kopfprodukt anfallende Methanol nach weiterer Destillation wieder als Rohstoff eingesetzt werden kann, und das IPMS mit einer Reinheit von > 98 % in einer Menge von 9 kg/h am Seitenabzug entnommen wurde, was einer kont. Ausbeute von 61 % entspricht. Zur Aufrechterhaltung der Massenbilanz innerhalb der Spalt- und Rektifizierkolonne, Vermeidung von Belegungen und ggf. Verstopfungen der Spaltapparatur wurde kontinuierlich ein Teilstrom aus dem Wälzkreislauf ausgeschleust.

## Patentansprüche

1. Verfahren zur Herstellung Alkoxysilangruppen-haltigen Isocyanats, bei dem in der Abfolge der Schritte A) bis D)
A) Alkoxysilanoalkylamin mit Dialkylcarbonat in Gegenwart eines basischen Katalysators zu Alkoxysilanoalkylurethan umgesetzt,
B) gleichzeitig oder aufeinander folgend
- der Katalysator abgetrennt und/oder deaktiviert, sowie
- Leichtsieder, Feststoffe, Salzfrachten und/oder Hochsieder entfernt
C) nach B) erhaltenes gereinigtes Alkoxysilanoalkylurethan unter Freisetzung von Alkoxysilangruppen-haltigem Isocyanat und Nebenprodukt und unter Verbleib von Sumpfmaterial thermisch gespalten, während
i) das Sumpfmaterial ganz oder partiell aus der Spaltapparatur ausgeschleust,
ii) thermisch behandelt und/oder aufgereinigt und/oder in Gegenwart von Alkohol einer Nachbehandlung unterzogen und
iii) das entnommene Material nach thermischer Behandlung und/oder Aufreinigung und/oder Nachbehandlung in Schritt A), B) oder C) erneut zugeführt wird und
D) Alkoxysilangruppen-haltiges Isocyanat und Nebenprodukt voneinander und vom Sumpfmaterial getrennt und aufgefangen wird,
**dadurch gekennzeichnet, dass** mindestens die Schritte C) und D) kontinuierlich geführt werden und der basische Katalysator eine Guanidinbase ist.

2. Verfahren nach einem der vorhergehenden Ansprüche, **dadurch gekennzeichnet, dass** das Alkoxysilanoalkylamin die Formel (1)
R³ₘ(OR²)₃₋ₘSi-R¹-NH₂ (1)
aufweist, wobei R³, R² und R¹ unabhängig voneinander gleiche oder verschiedene Kohlenwasserstoffreste mit 1 - 6 C-Atomen bedeuten, wobei diese linear oder verzweigt sein können, und m gleich 0 - 2 bedeutet.

3. Verfahren nach einem der vorhergehenden Ansprüche, **dadurch gekennzeichnet, dass** das eingesetzte Dialkylcarbonat ausgewählt aus Dimethyl-, Diethyl-, Dipropyl- und/oder Dibutylcarbonat ist.

4. Verfahren nach einem der vorhergehenden Ansprüche, **dadurch gekennzeichnet, dass** die Guanidinbase in neutraler Form die folgende Strukturformel (I) aufweisen, 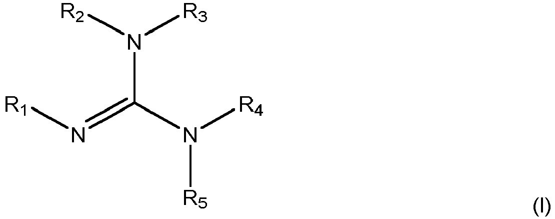 in der Ri, R₂, R₃, R₄ und R₅
1. jeweils unabhängig voneinander ausgewählt aus einem ggf. substituierten C₁-C₁₄-Alkylrest ist und/oder
2. R₁ und R₂ und/oder R₃ und R₄ zusammen einen ggf. substituierten C₂-, C₃-, oder C₄-Alkylenrest oder einen ggf. entsprechenden, bevorzugt mit N oder O substituierten, Heteroalkylenrest darstellen und/oder
3. R₅ = H ist.

5. Verfahren nach einem der vorhergehenden Ansprüche, **dadurch gekennzeichnet, dass** die Guanidinbase ausgewählt aus der Gruppe bestehend aus
a. Bartons Base, Murphys Guanidin, 1,5,7-Triazabicyclo[4.4.0]dec-5-en (TBD), Pentamethylguanidin, tert.-Butyltetramethylguanidin (BTMG),
b. Umsetzungsprodukten
i. von Oligocarbodiimiden oder Polycarbodiimiden mit Aminen oder
ii. von Polyaminen mit Carbodiimiden
ist.

6. Verfahren nach einem der vorhergehenden Ansprüche, **dadurch gekennzeichnet, dass** in Schritt
B) in der Abfolge der Schritte i) bis iv)
i) der Katalysator abgetrennt und/oder deaktiviert,
ii) Leichtsieder destillativ abgetrennt,
iii) optional Feststoffe und/oder Salzfrachten abfiltriert oder abzentrifugiert und
iv) Hochsieder über Dünnschichtverdampfung abgetrennt werden.

7. Verfahren nach Anspruch 6, **dadurch gekennzeichnet, dass** der Rückstand der Dünnschichtverdampfung in die Urethansynthese A) oder in den optionalen Filtrationsschritt B) iii) zurückgeführt wird.

8. Verfahren nach einem der vorhergehenden Ansprüche, **dadurch gekennzeichnet, dass** die thermische Spaltung C) lösemittelfrei und in Gegenwart eine Katalysators bei einer Temperatur von 150 - 280 °C und einem Druck von 0,5 - 200 mbar durchgeführt wird.

9. Verfahren nach Anspruch 8, **dadurch gekennzeichnet, dass** die Katalysatorkonzentration 0,5 - 100 ppm beträgt.

10. Verfahren nach einem der vorhergehenden Ansprüche, **dadurch gekennzeichnet, dass** in Schritt C) eine Menge an Sumpfmaterial entsprechend 1 - 90 Gew.-% bezogen auf den Feed, aus dem Sumpf ausgeschleust und in Schritt A), B) oder C) wieder zugegeben wird.

11. Verfahren nach Anspruch 1 oder 8, **dadurch gekennzeichnet, dass** das ausgeschleuste Sumpfmaterial
- bei einer Temperatur von 150 - 250 °C über einen Zeitraum von 0,2 bis 4 h thermisch behandelt und/oder
- bei vermindertem Druck und einer Temperatur von 150 - 250 °C destilliert und/oder
- in Gegenwart eines Alkohols der Formel R²OH mit R² = linearer, verzweigter oder cyclischer Kohlenwasserstoffrest mit 1 - 6- C-Atomen bei 25 - 100°C in Gegenwart oder Abwesenheit eines Katalysators umgesetzt wird.

12. Verfahren nach Anspruch 11, **dadurch gekennzeichnet, dass** keine Umsetzung mit Alkohol durchgeführt wird.

13. Verfahren nach Anspruch 11, **dadurch gekennzeichnet, dass** das erhaltene Destillat Schritt B) oder C) zugeführt wird.

14. Verfahren nach einem der vorhergehenden Ansprüche, **dadurch gekennzeichnet, dass** die Trennung in Schritt D) eine Rektifikation ist.

## Claims

1. Process for preparing isocyanate containing alkoxysilane groups, in which, in the sequence of steps A) to D),
A) alkoxysilanoalkylamine is reacted with dialkyl carbonate in the presence of a basic catalyst to give alkoxysilanoalkylurethane,
B) simultaneously or successively
- the catalyst is removed and/or deactivated, and
- low boilers, solids, salt burdens and/or high boilers are removed,
C) purified alkoxysilanoalkylurethane obtained after B) is thermally cleaved to release isocyanate containing alkoxysilane groups and by-product, leaving bottoms material, while
i) the bottoms material is being wholly or partly discharged from the cleavage apparatus,
ii) subjected to thermal treatment and/or purification and/or an aftertreatment in the presence of alcohol and
iii) the material removed, after thermal treatment and/or purification and/or aftertreatment in step A), B) or C), is fed in again, and
D) isocyanate containing alkoxysilane groups and by-product are separated from one another and from the bottoms material and collected,
**characterized in that**
at least the steps C) and D) are conducted continuously and the basic catalyst is a guanidine base.

2. Process according to either of the preceding claims, **characterized in that** the alkoxysilanoalkylamine has the formula (1)
R³ₘ(OR²)₃₋ₘSi-R¹-NH₂ (1)
where R³, R² and R¹ are each independently identical or different hydrocarbyl radicals having 1-6 carbon atoms, where these may be linear or branched, and m is 0-2.

3. Process according to either of the preceding claims, **characterized in that** the dialkyl carbonate used is selected from dimethyl, diethyl, dipropyl and/or dibutyl carbonate.

4. Process according to any of the preceding claims, **characterized in that** the guanidine base in uncharged form has the following structural formula (I): 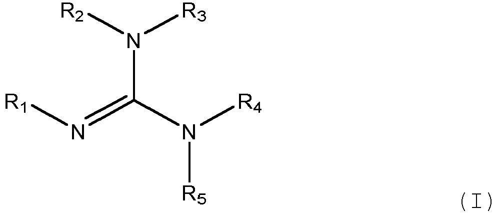 in which R₁, R₂, R₃, R₄ and R₅
1. are each independently selected from an optionally substituted C₁-C₁₄-alkyl radical and/or
2. R₁ and R₂ and/or R₃ and R₄ together are an optionally substituted C₂-, C₃-, or C₄-alkylene radical or an optionally corresponding, preferably N- or O-substituted, heteroalkylene radical and/or
3. R₅ = H.

5. Process according to any of the preceding claims, **characterized in that** the guanidine base is selected from the group consisting of
a. Barton's base, Murphy's guanidine, 1,5,7-triazabicyclo[4.4.0]dec-5-ene (TBD), pentamethylguanidine, tert-butyltetramethylguanidine (BTMG),
b. reaction products
i. of oligocarbodiimides or polycarbodiimides with amines or
ii. of polyamines with carbodiimides.

6. Process according to any of the preceding claims, **characterized in that**, in step
B) in the sequence of steps i) to iv),
i) the catalyst is removed and/or deactivated,
ii) low boilers are removed by distillation,
iii) solids and/or salt burdens are optionally filtered or centrifuged off and
iv) high boilers are removed via thin-film evaporation.

7. Process according to Claim 6, **characterized in that** the residue from the thin-film evaporation is recycled into the urethane synthesis A) or into the optional filtration step B) iii).

8. Process according to any of the preceding claims, **characterized in that** the thermal cleavage C) is conducted without solvent and in the presence of a catalyst at a temperature of 150-280°C and a pressure of 0.5-200 mbar.

9. Process according to Claim 8, **characterized in that** the catalyst concentration is 0.5-100 ppm.

10. Process according to any of the preceding claims, **characterized in that**, in step C), an amount of bottoms material corresponding to 1-90% by weight based on the feed is discharged from the bottom and added again in step A), B) or C).

11. Process according to Claim 1 or 8, **characterized in that** the discharged bottoms material
- is subjected to thermal treatment at a temperature of 150-250°C over a period of 0.2 to 4 h and/or
- is distilled under reduced pressure and at a temperature of 150-250°C and/or
- is converted in the presence of an alcohol of the formula R²OH with R² = linear, branched or cyclic hydrocarbyl radical having 1-6 carbon atoms at 25-100°C in the presence or absence of a catalyst.

12. Process according to Claim 11, **characterized in that** no reaction with alcohol is conducted.

13. Process according to Claim 11, **characterized in that** the distillate obtained is sent to step B) or C).

14. Process according to any of the preceding claims, **characterized in that** the separation in step D) is a rectification.

## Revendications

1. Procédé de préparation d'un isocyanate contenant des groupes alcoxysilane, selon lequel, dans la succession des étapes A) à D),
A) une alcoxysilanoalkylamine est mise en réaction avec un carbonate de dialkyle en présence d'un catalyseur basique pour former un alcoxysilanoalkyluréthane,
B) simultanément ou successivement,
- le catalyseur est séparé et/ou désactivé, et
- des composants de point d'ébullition faible, des solides, des charges salines et/ou des composants de point d'ébullition élevé sont éliminés,
C) l'alcoxysilanoalkyluréthane purifié obtenu selon B) est clivé thermiquement en libérant un isocyanate contenant des groupes alcoxysilane et un produit secondaire, et en laissant un matériau de fond, tandis que
i) le matériau de fond est évacué en totalité ou en partie de l'appareil de clivage,
ii) traité thermiquement et/ou purifié et/ou soumis à un post-traitement en présence d'un alcool, et
iii) le matériau soutiré est de nouveau acheminé dans l'étape A), B) ou C) après le traitement thermique et/ou la purification et/ou le post-traitement, et
D) l'isocyanate contenant des groupes alcoxysilane et le produit secondaire sont séparés l'un de l'autre et du matériau de fond et collectés,
**caractérisé en ce qu'**au moins les étapes C) et D) sont réalisées en continu et le catalyseur basique est une base guanidine.

2. Procédé selon l'une quelconque des revendications précédentes, **caractérisé en ce que** l'alcoxysilanoalkylamine présente la formule (1) :
R³ₘ(OR²)₃₋ₘSi-R¹-NH₂ (1)
dans laquelle R³, R² et R¹ signifient indépendamment les uns des autres des radicaux hydrocarbonés identiques ou différents de 1 à 6 atomes C, ceux-ci pouvant être linéaires ou ramifiés, et m signifie 0 à 2.

3. Procédé selon l'une quelconque des revendications précédentes, **caractérisé en ce que** le carbonate de dialkyle utilisé est choisi parmi le carbonate de diméthyle, diéthyle, dipropyle et/ou dibutyle.

4. Procédé selon l'une quelconque des revendications précédentes, **caractérisé en ce que** la base guanidine présente sous forme neutre la formule structurale suivante (I) : 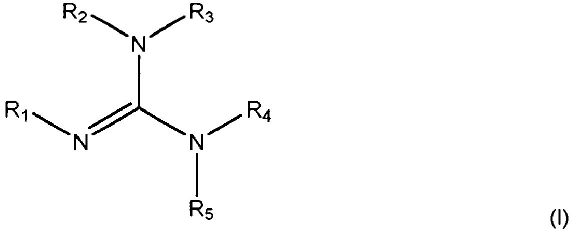 dans laquelle R₁, R₂, R₃, R₄ et R₅
1. sont chacun choisis indépendamment les uns des autres parmi un radical alkyle en C₁-C₁₄ éventuellement substitué et/ou
2. R₁ et R₂ et/ou R₃ et R₄ représentent ensemble un radical alkylène en C₂, C₃ ou C₄ éventuellement substitué ou un radical hétéroalkylène éventuellement correspondant, de préférence substitué avec N ou O, et/ou
3. R₅ = H.

5. Procédé selon l'une quelconque des revendications précédentes, **caractérisé en ce que** la base guanidine est choisie dans le groupe constitué par :
a. la base de Barton, la guanidine de Murphy, le 1,5,7-triazabicyclo[4.4.0]déc-5-ène (TBD), la pentaméthylguanidine, la tert.-butyltétraméthylguanidine (BTMG),
b. les produits de réaction
i. d'oligocarbodiimides ou de polycarbodiimides avec des amines ou
ii. de polyamines avec des carbodiimides.

6. Procédé selon l'une quelconque des revendications précédentes, **caractérisé en ce que**, dans l'étape B) dans la succession des étapes i) à iv),
i) le catalyseur est séparé et/ou désactivé,
ii) des composants de point d'ébullition faible sont séparés par distillation,
iii) des solides et/ou des charges salines sont optionnellement éliminés par filtration ou éliminés par centrifugation, et
iv) des composants de point d'ébullition élevé sont séparés par évaporation en couche mince.

7. Procédé selon la revendication 6, **caractérisé en ce que** le résidu de l'évaporation en couche mince est recyclé dans la synthèse d'uréthane A) ou dans l'étape de filtration optionnelle B) iii).

8. Procédé selon l'une quelconque des revendications précédentes, **caractérisé en ce que** le clivage thermique C) est réalisé sans solvant et en présence d'un catalyseur à une température de 150 à 280 °C et une pression de 0,5 à 200 mbar.

9. Procédé selon la revendication 8, **caractérisé en ce que** la concentration de catalyseur est de 0,5 à 100 ppm.

10. Procédé selon l'une quelconque des revendications précédentes, **caractérisé en ce que**, dans l'étape C), une quantité de matériau de fond correspondant à 1 à 90 % en poids, par rapport à l'alimentation, est évacuée à partir du fond et rajoutée dans l'étape A), B) ou C).

11. Procédé selon la revendication 1 ou 8, **caractérisé en ce que** le matériau de fond évacué
- est traité thermiquement à une température de 150 à 250 °C pendant une durée de 0,2 à 4 h, et/ou
- est distillé à pression réduite et à une température de 150 à 250 °C, et/ou
- est mis en réaction en présence d'un alcool de la formule R²OH avec R² = radical hydrocarboné linéaire, ramifié ou cyclique, de 1 à 6 atomes C, à 25 à 100 °C en présence ou en l'absence d'un catalyseur.

12. Procédé selon la revendication 11, **caractérisé en ce qu'**aucune réaction avec un alcool n'est réalisée.

13. Procédé selon la revendication 11, **caractérisé en ce que** le distillat obtenu est acheminé dans l'étape B) ou C) .

14. Procédé selon l'une quelconque des revendications précédentes, **caractérisé en ce que** la séparation dans l'étape D) est une rectification.
